# FASCICULE DE BREVET EUROPEEN

(11) **EP 1 790 030 B1**
(45) Date de publication et mention de la délivrance du brevet: **25.02.2009**
(21) Numéro de dépôt: 05779662.5
(22) Date de dépôt: 27.06.2005
(51) Int. Cl.: H01M 10/40, H01M 10/26, H01M 6/18, H01M 4/02, H01M 4/62, G02F 1/15, C09K 9/02

(54) **MATERIAU A CONDUCTION IONIQUE CONTENANT UN OLIGOETHER SULFATE**
IONISCHES LEITENDES MATERIAL ENTHALTEND EIN OLIGOETHERSULFAT
IONIC CONDUCTING MATERIAL CONTAINING AN OLIGOETHER SULPHATE

(30) Priorité: 28.06.2004 FR 0407061
(43) Date de publication de la demande: 30.05.2007
(73) Titulaire: Batscap, 29500 Ergué-Gabéric (FR)
(72) Inventeur: SANCHEZ, Jean-Yves, F-38330 SAINT ISMIER (FR); CHAUVIN, Christophe, F-38090 VAULX MILIEU (FR); ALLOIN, Fannie, F-38220 VEZILLE (FR); DESCHAMPS, Marc, F-29000 QUIMPER (FR)
(74) Mandataire: Sueur, Yvette
(86) Numéro de dépôt international: PCT/FR2005/001623
(87) Numéro de publication internationale: WO 2006/010843

(56) Documents cités:
- H. CHEN ET AL.: "Single-ion conduction and electrochemical characteristics of poly(oxyethylene) / lithium methoxy oligo(oxyethylene) sulfate blend" J. MACROMOL. SCI. - PURE APPL. CHEM., vol. A33, no. 9, 1996, pages 1273-1281, XP009044709 cité dans la demande
- Y. ZHENG ET AL.: "Single ion conduction in lithium methoxy oligo(oxyethylene) sulfate-comblike polyether complex" J. MACROMOL. SCI. - PURE APPL. CHEM., vol. A30, no. 5, 1993, pages 365-372, XP009044708 cité dans la demande
- Y. ZHENG ET AL.: "Cationic conduction in oligoether salt-comblike polyether complex" J. APPL. POLYM. SCI., vol. 57, no. 5, 1 août 1995 (1995-08-01), pages 623-629, XP002320463
- F. B. DIAS ET AL.: "Trends in polymer electrolytes for secondary lithium batteries" JOURNAL OF POWER SOURCES, vol. 88, no. 2, juin 2000 (2000-06), pages 169-191, XP004199257 ISSN: 0378-7753
- D. BENRABAH ET AL.: "Comparative electrochemical study of new poly(oxyethylene)-Li salt complexes" J. CHEM SOC., FARADAY TRANS., vol. 89, no. 2, 21 janvier 1993 (1993-01-21), pages 355-359, XP002144674 ISSN: 1463-9076
- B. YANG ET AL.: "Study on ionic conductive property of polyurethane/oligo-ether sulfate complex" EUR. POLYM. J., vol. 37, no. 9, septembre 2001 (2001-09), pages 1813-1819, XP002320464
- K . XU ET AL.: "Synthesis and characterization of lithium sulfonates as components of molten salt electrolytes" ELECTROCHIMICA ACTA, vol. 40, no. 13, octobre 1995 (1995-10), pages 2401-2403, XP004019724 ISSN: 0013-4686
- W. XU. ET AL.: "Ionic conduction of lithium oligo(ethyleneoxy) phenylsulfonate and its complex with poly(ethylene oxide)" SOLID STATE IONICS, vol. 111, no. 3-4, 1 septembre 1998 (1998-09-01), pages 219-226, XP004146241 ISSN: 0167-2738
- R. A. COLLEY ET AL.: "Poly[oxymethylene-oligo(oxyethylene)] for use in subambient temperature electrochromic devices" POLYMER INT., vol. 49, no. 4, 27 juillet 2000 (2000-07-27), pages 371-376, XP002320462 ISSN: 0959-8103

## Description

La présente invention concerne un électrolyte solide polymère, ainsi que ses applications.

Les électrolytes solides polymères sont utilisés dans différents systèmes électrochimiques, notamment dans les générateurs électrochimiques au lithium rechargeables ou non, dans les systèmes électrochromes et dans les supercondensateurs. Ils peuvent également être utilisés pour la réalisation d'électrodes composites notamment pour les générateurs. L'utilisation d'un électrolyte solide polymère permet d'élaborer des dispositifs électrochimiques de faible épaisseur et de formes variées.

Un électrolyte solide polymère est constitué essentiellement par un sel et un solvant, ledit solvant étant par exemple un polymère solvatant, ou un polymère plastifié par un solvant liquide polaire aprotique ou un mélange de tels solvants liquides. Parmi les polymères solvatants, on peut citer les homopolymères d'oxyde d'éthylène (POE), et les copolymères d'oxyde d'éthylène.

Les sels de lithium sont avantageusement utilisés, en particulier lorsque l'électrolyte est destiné à une batterie, en raison du potentiel rédox du couple Li/Li⁺ qui se situe à -3 volts par rapport à l'électrode normale à hydrogène et qui donne des générateurs de forte tension. En outre, sa forte capacité spécifique donne des générateurs à forte énergie spécifique. Dans une batterie dans laquelle le composé ionique est un sel de lithium, l'électrode négative peut être constituée soit par une feuille de lithium métallique (batterie au lithium), soit par un composé d'insertion de lithium (batterie lithium-ion).

Comme sel de lithium pour un électrolyte solide polymère d'une batterie au lithium, il est connu d'utiliser des sels perfluorés, tels que notamment l'hexafluorophosphate de lithium (LiPF₆), le bis(trifluorométhanesulfonyl)imidure de lithium (LiTFSI), et le tris(perfluorométhanesulfonyl)-méthylure de lithium (LiTFSM). LiTFSI et LiTFSM sont des sels particulièrement bien adaptés pour les batteries à électrolyte solide polymère qui ont une électrode négative de lithium, car ils donnent d'excellentes conductivités. Cependant, ils sont onéreux, la présence de fluor peut avoir des effets néfastes sur l'environnement, et ils ont un nombre de transport cationique t⁺ faible.

Des électrolytes contenant comme sel un oligoéther sulfate de lithium sont décrits notamment dans Y. Zheng, et al, J. Macromol. Sci. - Part A: Pure Applied Chemistry, A30(5), 365-372 (1993). Ce document décrit la préparation d'un sel de lithium d'un sulfate d'oligo(oxyéthylène), et la formation d'un complexe avec un poly[méthoxy oligo(oxyéthylène) méthacrylate-co-acrylamide] [P(MeO₁₆-AM].

H. Chen, et al, J. Macromol. Sci. - Part A: Pure Applied Chemistry, A33(9), 1273-1281 (1996) décrivent le comportement d'un électrolyte constitué par un sel de lithium d'un sulfate d'oligo(oxyéthylène) dissous dans un POE. Les propriétés sont comparées à celles des complexes décrits dans la publication précitée.

X. Ollivrin (thèse soutenue le 6 mai 1999 à l'Institut National Polytechnique de Grenoble) décrit la préparation de divers oligomères d'oxyde d'éthylène portant un groupe terminal sulfate de lithium (POEMS) ou deux groupes terminaux sulfate de lithium (POEDS), ainsi que leur utilisation comme électrolyte sous forme d'une solution dans le POE. Les performances de l'électrolyte POEMS/POE et POEDS/POE sont comparées à celle de l'électrolyte LiTFSI/POE. Il apparaît qu'un électrolyte polymère contenant LiTFSI donne une conductivité ionique élevée, mais un nombre de transport cationique relativement faible, alors qu'un électrolyte contenant un POEMS ou un POEDS présente un nombre de transport cationique plus élevé mais une conductivité ionique plus faible.

Y. Zheng, et al, [J. Appl. Science, vol. 75, n° 5, 01/08/1995, p. 623-629] décrivent la préparation d'un sel de lithium d'un sulfate d'oligo(oxyéthylène) et d'un sel de lithium d'un sulfonate d'oligo(oxyéthylène), et la formation d'un complexe de chacun de ces sels avec un poly[méthoxy oligo(oxyéthylène) méthacrylate-co-acrylamide]. Les propriétés de conduction sont comparées avec celles d'un complexe formé par LiClO₄ avec le poly[méthoxy oligo(oxyéthylène) méthacrylate-co-acrylamide]. L'utilisation de LiTFSI n'est pas mentionnée.

F. B. Bias, et al., [Journal of Power Sources, vol. 88, n°2, (2000-06), p. 169-191] décrivent des matériaux à conduction ionique constitués par un polymère solvatant et un sel de lithium. Les sels de lithium classiques, y compris LiTFSI, sont cités. Cependant, les oligoéthersulfates de lithium ne sont pas mentionnées, et l'utilisation conjointe de ce type de composés ioniques en combinaison avec LiTFSI n'est pas suggérée.

D. Benrabah, et al. [J. Chem., Faraday Trans., vol. 89, n° 2, 21/01/1993), p. 355-359] décrivent des complexes POE-sel de lithium, le sel étant du type TFSI ou TFSM. Les matériaux ne contiennent pas un mélange de TFSI et d'un oligoéthersulfate de lithium.

B. Yang, et al., [Eur. Pol. J., vol. 37, n° 9, p. 1813-1819] décrivent des complexes formés à partir d'un oligoéthersulfates de lithium et de polyuréthane. D'une part, le polyuréthane n'est pas un polymère solvatant, et d'autre part le complexe ne comprend pas de LiTFSI.

Un matériau à conduction ionique est caractérisé notamment par une conductivité ionique (σ), un nombre de transport cationique (t⁺) et une conductivité cationique (σ₊) qui est le produit de la conductivité ionique par le nombre de transport cationique (σ+= σ*t⁺).

Lorsqu'un matériau à conduction ionique contenant un sel de lithium comme composé ionique est utilisé comme électrolyte d'une batterie, la seule espèce qui participe aux réactions électrochimiques est le cation lithium. La conductivité cationique reflète en particulier la mobilité du cation lithium dans l'électrolyte polymère sous un champ électrique. Les performances de la batterie seront théoriquement plus élevées si la valeur de la conductivité cationique est plus élevée.

Les performances (nombre de transport cationique, conductivité ionique ou cationique) de matériaux contenant soit LiTFSI, soit un oligoéther de sulfate sont connues. Il apparaît que globalement les premiers ont un nombre de transport cationique faible et une conductivité ionique élevée, alors que les seconds ont un nombre de transport élevé et une conductivité faible. F. Alloin, et al. (Journal of Power Sources 68 (1997) 372-376) ont déterminé le nombre de transport cationique t⁺ de LiTFSI, d'un ionomère DaaR_{f}SO₃Li (Daa représentant un groupe diallylamide) et d'un mélange d'un ionomère DaaR_{f}SO₃Li et de LiTFSI, chacun en solution dans un solvant polyéther réticulé. Le t⁺ de LiTFSI reste faible, de l'ordre de 0,1, pour les valeurs du rapport O/Li du matériau LiTFSI+Polyéther, qui sont compatibles avec l'utilisation du matériau comme électrolyte. Le t⁺ de l'ionomère est très élevé, proche de 1. Mais les auteurs constatent que le t⁺ d'un matériau contenant un mélange de LiTFSI et de DaaR_{f}SO₃Li reste pratiquement équivalent à celui du matériau contenant uniquement LiTFSI, c'est-à-dire à une valeur faible, alors que l'on pouvait espérer une valeur intermédiaire entre celle donnée par LiTFSI et celle donnée par DaaR_{f}SO₃Li.

Or les présents inventeurs ont trouvé que, de manière surprenante, l'utilisation conjointe d'un oligoéther sulfate de lithium et de LiTFSI en solution dans un polymère solvatant pour former un matériau à conduction ionique donne un effet de synergie et permet d'obtenir un nombre de transport cationique amélioré par rapport à celui d'un matériau à conduction ionique contenant du LiTFSI comme seule source de Li en solution dans un polymère solvatant. Ce phénomène est particulièrement avantageux dans la mesure où LiTFSI, qui est un composé relativement nocif du fait qu'il est perfluoré, peut être remplacé partiellement par un composé moins nocif, dont la préparation est moins coûteuse et dont le recyclage serait plus facile.

La présente invention a par conséquent pour objet un matériau à conduction ionique comprenant au moins un composé ionique en solution dans un polymère solvatant, caractérisé en ce que :
- le composé ionique est un mélange d'un bis(trifluorométhanesulfonyl)imidure de lithium (LiTFSI) et d'au moins un oligoéther sulfate de lithium choisi parmi les oligoéthermonosulfates de lithium répondant à la formule R-[O-CH₂-CH₂)]ₙ-O-SO₃⁻Li⁺ (I) dans laquelle R est un groupe CₘH₂ₘ₊₁ avec 1≤m≤4 et 2≤n≤17, et les oligoétherdisulfates de lithium répondant à la formule Li⁺ O⁻SO₂-O-CH₂-[CH₂-O-CH₂]p-CH₂-O-SO₂-O⁻ Li⁺ (II) dans laquelle 3≤p≤45,
- le rapport global Oₜ/Liₜ est inférieur ou égal à 40, Oₜ représentant le nombre total d'atomes O fournis par le polymère solvatant et par l'oligoéther ;
- la teneur en LiTFSI est telle que le rapport Oₜ/LiTFSI est supérieur ou égal à 20.

Dans la suite du texte, un oligoéthermonosulfate de lithium est désigné par POEMS et un oligoétherdisulfate de lithium est désigné par POEDS.

Outre un effet inattendu de synergie de l'association entre LiTFSI et un oligomère sulfate de lithium qui sera démontré ci-après, la présente invention présente non seulement l'avantage de réaliser une économie par le remplacement partiel de LiTFSI par l'oligomère, mais encore un avantage du point de vue écologique résultant de ce remplacement.

Un polymère solvatant, utilisable comme solvant du composé ionique, est un polymère dans lequel le sel est soluble et dissocié partiellement ou totalement en cation et en anion, sans séparation de phase entre le polymère et le sel. A titre d'exemple, on peut citer les homopolymère et les copolymères d'oxyde d'éthylène, d'oxyde de propylène ou de dioxolane. On peut également citer les copolymères d'oxyde d'éthylène et d'un comonomère réticulable (par exemple l'allylglycidyléther). Les homopolymères d'oxyde d'éthylène, les copolymères d'oxyde d'éthylène et les réseaux à base de poly(oxyéthylène) sont particulièrement préférés. On peut utiliser des homopolymères et des copolymères d'oxyde d'éthylène ayant des masses molaires variées, par exemple un homopolymère POE de masse molaire 100 000 g/mol ou 5.10⁶ g/mol. Lorsque l'on utilise un polymère solvatant unidimensionnel, il est préférable qu'il ait une masse supérieure à 100 000 g/mol pour assurer une tenue mécanique suffisante.

Le polymère solvatant peut éventuellement être plastifié par addition d'un agent plastifiant choisi parmi les solvants liquides polaires aprotiques, la quantité de solvant liquide étant inférieure à 30% en poids, de préférence compris entre 5% et 10% en poids. L'agent plastifiant peut être choisi par exemple parmi le carbonate d'éthylène, le carbonate de propylène, la γ-butyrolactone, le diméthylformamide, la N-méthylpyrrolidone, les tétraalkylsulfamides, les éthers diméthyliques de polyéthylène glycol de masse comprise entre 200 et 2000 et, d'une manière générale, les dérivés de molécules polaires de faible volatilité.

Suivant un mode de réalisation préféré de l'invention, le composé ionique du matériau à conduction ionique est un mélange de LiTFSI et d'un POEMS de formule (I) dans laquelle R est un groupe méthyle et n est compris entre 2 et 17, de préférence n ≤12.

Suivant un autre mode de réalisation préféré de l'invention, le composé ionique du matériau à conduction ionique est un mélange de LiTFSI et d'un POEDS de formule (II) dans laquelle p est compris entre 3 et 45, de préférence p≤ 12.

Les oligoéther sulfates de lithium sont obtenus par des procédés de synthèse bien connus de l'homme de l'art.

Un oligoéthermonosulfate R-[O-CH₂-CH₂)]ₙ-O-SO₃⁻Li⁺ est obtenu par un procédé en deux étapes, dans lequel :
- au cours de la première étape, on estérifie la fonction alcool d'un composé R-[O-CH₂-CH₂)]ₙ-OH par addition d'acide chlorosulfonique, en milieu anhydre et sous un balayage de gaz neutre, selon le schéma réactionnel suivant :

   R-[O-CH₂-CH₂)]ₙ-OH + HSO₃Cl--> R-[O-CH₂-CH₂)]ₙ-O-SO₃⁻H⁺, HCl
- au cours de la seconde étape, on neutralise le composé obtenu par un hydroxyde alcalin (par exemple LiOH) selon le schéma réactionnel suivant :

R-[O-CH₂-CH₂)]ₙ-O-SO₃⁻H⁺ HCl + LiOH --> R-[O-CH₂-CH₂)]ₙ-O-SO₃⁻Li⁺ + H₂O.

Pour la 1^{ère} étape, on choisit un solvant insensible ou peu sensible aux acides, par exemple un solvant chloré tel que le dichlorométhane. Il est préférable d'ajouter lentement l'acide chlorosulfonique à R-[O-CH₂-CH₂)]ₙ-OH en raison du caractère fortement exothermique de la réaction. On utilise un léger excès d'acide chlorosulfonique pour tenir compte des traces d'eau.

Pour la 2^{ème} étape, on utilise de préférence un excès d'hydroxyde alcalin pour compenser les impuretés acides provenant de la 1^{ère} étape.

Pour limiter les inconvénients liés à la présence d'eau au cours de la 1^{ère} étape, on soumet de préférence le composé R-[O-CH₂-CH₂)]ₙ-OH à un séchage préliminaire à 80°C sous vide dynamique.

Les composés R-[O-CH₂-CH₂)]ₙ-OH sont des produits commercialisés notamment par la société Aldrich.

Un oligoéther disulfate de lithium Li⁺ O⁻SO₂-O-CH₂-[CH₂-O-CH₂]ₚ-CH₂-O-SO₂-O⁻ Li⁺ est obtenu selon un procédé similaire à partir du poly(oxyéthylène) glycol correspondant.

Le matériau à conduction ionique selon la présente invention est obtenu par mélange d'un ou de plusieurs oligoéther sulfates de lithium, de LiTFSI, d'un polymère solvatant et d'un agent plastifiant dudit polymère le cas échéant. On peut ajouter divers additifs choisis par exemple parmi les charges minérales, les sels de lithium classiquement utilisés dans les matériaux à conduction ionique, les charges organiques de type cellulosique, et les agents ignifugeants. L'addition de carbonate de propylène comme agent plastifiant permet en outre d'augmenter la constante diélectrique et d'améliorer la dissociation des composés ioniques. La teneur en additif du type sel de lithium est inférieure à 10% en poids, de préférence inférieure à 5% en poids. La charge minérale peut être constituée par de la silice. La charge organique peut être constituée par des whiskers ou des microfibrilles de cellulose tels que décrits par exemple dans FR-2 841 255. Le mélange peut être mis en forme par extrusion ou par enduction d'un substrat.

Lorsqu'un matériau à conduction ionique selon l'invention est préparé sous forme d'un film, il est directement utilisable en tant que film d'électrolyte pour un dispositif électrochimique. Le procédé consiste dans ce cas à préparer une solution de polymère solvatant, de LiTFSI, d'un oligoéthersulfate de lithium et éventuellement d'un ou plusieurs agents plastifiants ou autres additifs dans un solvant, à dégazer la solution obtenue, puis à la couler sur un substrat, et à laisser le film sécher sous vide par évaporation du solvant. Comme solvant, on peut utiliser un solvant volatil tel que par exemple l'acétonitrile, le diméthylformamide ou le dichlorométhane. On utilise de préférence un substrat dont la surface est revêtu d'une couche d'un matériau inerte et anti-adhésif tel que le polytétrafluoroéthylène. La surface du film coulé peut être délimitée par un anneau de verre collé sur la surface du substrat. Lorsque le film de matériau selon l'invention est destiné à être utilisé comme film d'électrolyte, on utilise de préférence comme polymère solvatant un homopolymère d'oxyde d'éthylène, un copolymère d'oxyde d'éthylène ou un réseau à base de poly(oxyéthylène).

Le matériau à conduction ionique de la présente invention peut être utilisé comme électrolyte solide polymère ou comme constituant d'une électrode composite. L'invention a par conséquent également pour objet une cellule électrochimique dans laquelle l'électrolyte comprend un matériau à conduction ionique selon la présente invention et/ou dans laquelle l'une au moins des électrodes est une électrode composite comprenant un tel matériau. Dans un mode de réalisation particulier, l'électrolyte est une membrane séparant les électrodes, la membrane étant constituée par un matériau à conduction ionique selon la présente invention, dans lequel le solvant polymère est plastifié par addition d'un agent plastifiant mentionné précédemment.

Ladite cellule électrochimique selon la présente invention peut être un générateur électrochimique au lithium, rechargeable ou non. Un tel générateur comprend une électrode négative et une électrode positive séparées par un électrolyte solide polymère, l'électrolyte solide polymère comprenant un matériau à conduction ionique selon la présente invention. Dans un tel générateur, les électrodes peuvent également contenir un matériau à conduction ionique de la présente invention agissant en tant que liant conducteur, lorsqu'elles sont réalisées sous forme composite.

Le matériau à conduction ionique selon la présente invention peut également être utilisé comme électrolyte ou comme liant d'une électrode composite dans d'autres systèmes électrochimiques tels que les systèmes électrochromes ou les systèmes de modulation de lumière, ou comme constituant de membranes sélectives ou de membranes de référence dans les capteurs à membrane.

La présente invention est illustrée par les exemples ci-dessous, auxquels elle ne doit cependant pas être limitée.

Dans les exemples qui suivent :
les oligoéthermonosulfates de lithium correspondent à la formule R-[O-CH₂-CH₂]ₙ-O-SO₃⁻Li⁺ (I)

| | | |
|---|---|---|
| POEMS 120 | n=2 | R est CH₃ |
| POEMS 164 | n=3 | R est CH₃ |
| POEMS 350 | n=7,2 | R est CH₃ |
| POEMS 550 | n=11,8 | R est CH₃ |
| POEMS 750 | n=16,3 | R est CH₃, |

les oligoétherdisulfates de lithium correspondent à la formule Li⁺ O⁻SO₂-O-CH₂-[CH₂-O-CH₂]ₚ-CH₂-O-SO₂-O⁻ Li⁺

| | |
|---|---|
| POEDS 200 | p=3,1 |
| POEDS 400 | p=7,7 |
| POEDS 600 | p=12,2 |
| POEDS 1000 | p=21,4 |
| POEDS 2000 | p=44 |

Des films de matériau selon l'invention ont été préparés en boîte à gant par évaporation. Le sel LiTFSI est un produit commercialisé par la société Fluka. Le polymère solvatant utilisé est un poly(oxyéthylène) ayant une masse molaire de 300 000 g/mol, désigné ci-après par POE3. Les sels POEMS et POEDS sont ceux qui ont été synthétisés précédemment. Les différents constituants ont été pesés en boîte à gant. Le solvant utilisé pour la formation du film est de l'acétonitrile anhydride séché sur tamis moléculaire fourni par Acros.

Les mesures de conductivité ont été effectuées sur les films par spectroscopie d'impédance électrochimique de la manière suivante. Un film de diamètre 9 mm a été monté en boîte à gant dans une pile bouton étanche entre un disque en acier inoxydable ayant un diamètre de 19 mm et une épaisseur de 1,5 mm, et un disque en acier inoxydable ayant un diamètre de 6 mm et une épaisseur de 1 mm.

La mesure du nombre de transport a été effectuée selon la méthode de Bruce et Vincent [J. Evans, et al., Polymer, 28, 2324-2328, (1987)], ladite méthode étant une combinaison de mesure de spectroscopie d'impédance et de chronoampérométrie.

Les masses molaires des oligomères synthétisés sont obtenues par chromatographie d'exclusion stérique, l'appareil étant étalonné par des échantillons étalons de PEG de masse Mn connue et monodisperse (l'indice de polydispersité I étant voisin de 1). Les masses molaires des oligomères ont été déterminées par extrapolation grâce aux étalons de PEG.

### Exemple 1

### Synthèse d'oligoéther monosulfates POEMS

Plusieurs échantillons de POEMS ont été préparés selon le procédé suivant.

On a dissous 20 grammes (x mol) de polyéthylène glycol monométhylé CH₃-(O-CH₂-CH₂)ₙ-OH (PEGM) de masse molaire M g/mol, (préalablement séché pendant 48 heures sous vide à température ambiante lorsque n = 2 ou 3, à 80°C lorsque n est supérieur à 3), dans 250 cm³ de dichlorométhane dans un ballon tricol de 500 cm³ placé dans un bain de glace. Pendant toute la durée de la synthèse, la solution a été soumise à un balayage d'Argon.

On a ensuite mélangé de l'acide chlorosulfonique en excès de 5% (v cm³) à 40 cm³ de dichlorométhane, et on a ajouté ce mélange goutte à goutte dans le ballon tricol par une ampoule à brome.

Après la fin de l'addition, on a laissé le milieu réactionnel sous balayage d'Argon pendant 1 heure. Ensuite, on a éliminé le solvant sous vide à l'évaporateur rotatif, et on a repris le résidu dans 100 cm³ d'eau distillée. La solution ainsi obtenue a été neutralisée par une solution 1 mol/L d'hydroxyde de lithium. La neutralisation est suivie au pH-mètre, et l'addition de la solution d'hydroxyde de lithium a été arrêtée dès que le pH a dépassé le pH de l'eau distillée.

L'eau a ensuite été éliminée sous vide à l'évaporateur rotatif. Le résidu a été repris dans l'acétonitrile et la solution obtenue a été centrifugée, puis filtrée successivement deux fois sur un filtre en PVDF microporeux de 1 µm, une fois sur un filtre de 0,45 µm, et une fois sur un filtre de 0,22 µm. L'acétonitrile a finalement été évaporé sous vide à l'évaporateur rotatif.

Le sel obtenu a ensuite été séché sous vide dans une cellule Büchi à 80°C et entreposé en boîte à gant sous argon. Il répond à la formule

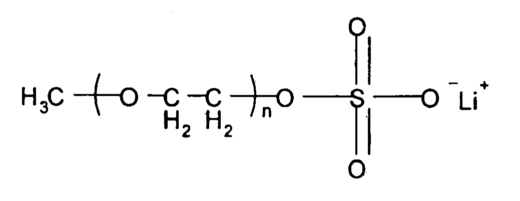

Les conditions de préparation particulières et le produit obtenu dans les divers essais effectués sont indiqués dans le tableau 1 suivant.

**Tableau 1**

| Echantillon | PEGM x(mole) | PEGM M (g/mol) | HClSO₃H v (cm³) | POEMS n |
|---|---|---|---|---|
| POEMS120 | 0,17 | 120 | 11,6 | 2 |
| POEMS164 | 0,12 | 164 | 8,5 | 3 |
| POEMS350 | 0,057 | 350 | 4 | 7,2 |
| POEMS550 | 0,0364 | 550 | 2,5 | 11,8 |
| POEMS750 | 0,266 | 750 | 1,9 | 16,3 |

Pour certains échantillons, la masse molaire du POEMS ainsi que celle du PEGM initial ont été mesurées par chromatographie d'exclusion stérique. Mw et Mn sont les masses molaires en masse et en nombre mesurées (en équivalent PEG), I est l'indice de polymolécularité, ΔM théorique est la différence entre la masse molaire théorique du POEMS synthétisé et la masse molaire théorique du PEG de départ. ΔM mesuré est la différence entre Mw du POEMS et Mw du PEG.

Les résultats ainsi que le temps d'élution t mesuré au pic du chromatogramme, sont indiqués dans le tableau 2 ci-dessous.

**Tableau 2**

| Polymère | M théorique | Mw (équivalent PEG) | Mn (équivalent PEG) | I | ΔM théorique | ΔM mesuré | t (min) |
|---|---|---|---|---|---|---|---|
| PEGM | 164 | 129 | 112 | 1,16 | | | 22,6 |
| POEMS164 | 250,2 | 282 | 254 | 1,11 | 86,2 | 153 | 19,4 |
| PEGM | 350 | 357 | 346 | 1,03 | | | 19,2 |
| POEMS350 | 436,2 | 408 | 373 | 1,09 | 86,2 | 51 | 17,8 |
| PEGM | 550 | 530 | 439 | 1,21 | | | 17,4 |
| POEMS550 | 636,2 | 533 | 463 | 1,15 | 86,2 | 3 | 16,6 |
| PEG | 750 | 637 | 566 | 1,13 | | | 17,0 |
| POEMS750 | 836,2 | 683 | 551 | 1,24 | 86,2 | 46 | 16,3 |

Pour certains échantillons de POEMS, on a mesuré la température de transition vitreuse Tg, la température de fusion Tf, l'enthalpie de fusion ΔH_{f}, ainsi que la conductivité intrinsèque σ (qui est la valeur de la conductivité du produit à l'état pur). Les résultats sont donnés dans le tableau 3 ci-dessous.

**Tableau 3**

| Echantillon | Tg(°C) | Tf (°C) | ΔH_{f} (J/g) | σ (S/cm)) à 80°C |
|---|---|---|---|---|
| POEMS164 | -31 | 57 | 62 | 4.10⁻⁵ |
| POEMS350 | -48 | | | 9.10⁻⁵ |
| POEMS 550 | -59 | 34 | 100 | 9.10⁻⁵ |
| POEMS750 | -60 | 40 | 120 | 9.10⁻⁵ |

### Exemple 2

### Préparation de polyéthylène glycol disulfate de lithium POEDS

Plusieurs échantillons de POEDS ont été préparés selon le procédé suivant.

On a dissous 20 grammes (x' mol) de polyéthylène glycol (PEG) de masse molaire M' g/mol, préalablement séché pendant 48 heures sous vide à 80°C, dans 250 cm³ de dichlorométhane dans un ballon tricol de 500 cm³ placé dans un bain de glace. Pendant toute la durée de la synthèse, la solution a été soumise à un balayage d'Argon.

On a ensuite mélangé de l'acide chlorosulfonique en excès de 5% (v' cm³) à 40 cm³ de dichlorométhane, et on a ajouté ce mélange goutte à goutte dans le ballon tricol par une ampoule à brome.

Après la fin de l'addition, on a laissé le milieu réactionnel sous balayage d'Argon pendant 1 heure. Ensuite, on a éliminé le solvant sous vide à l'évaporateur rotatif, et on a repris le résidu dans 100 cm³ d'eau distillée. La solution ainsi obtenue a été neutralisée par une solution 1 mol/L d'hydroxyde de lithium. La neutralisation est suivie au pH-mètre, et l'addition de la solution d'hydroxyde de lithium a été arrêtée dès que le pH a dépassé le pH de l'eau distillée.

L'eau a ensuite été éliminée sous vide à l'évaporateur rotatif. Le résidu a été repris dans l'acétonitrile et la solution obtenue a été centrifugée, puis filtrée successivement deux fois sur un filtre en PVDF microporeux de 1 µm, une fois sur un filtre de 0,45 µm, et une fois sur un filtre de 0,22 µm. L'acétonitrile a finalement été évaporé sous vide à l'évaporateur rotatif.

Le sel obtenu a ensuite été séché sous vide dans une cellule Büchi à 80°C et entreposé en boîte à gant sous argon.

Les conditions particulières de préparation et le produit obtenu dans les divers essais effectués sont indiqués dans le tableau 4 suivant.

**Tableau 4**

| Echantillon | PEG x'(mole) | PEG M'(glmol) | HClSO₃H v'(cm³) | POEDS n |
|---|---|---|---|---|
| POEDS200 | 0,2 | 200 | 14 | 3,1 |
| POEDS400 | 0,05 | 400 | 3,5 | 7,7 |
| POEDS600 | 0,088 | 600 | 5,8 | 12,2 |
| POEDS1000 | 0,03 | 1000 | 2,1 | 21,4 |
| POEDS2000 | 0,01 | 2000 | 0,7 | 44 |

Pour certains échantillons de POEDS, on a mesuré la température de transition vitreuse Tg, la température de fusion Tf, l'enthalpie de fusion ΔH_{f}, ainsi que la conductivité intrinsèque σ. Les résultats sont donnés dans le tableau 5 ci-dessous.

**Tableau 5**

| Echantillon | Tg (°C) | Tf (°C) | ΔH_{f} (J/g) | σ (S/cm) ) à 80°C |
|---|---|---|---|---|
| POEDS200 | -24 | 27 | 1,2 | |
| POEDS400 | -26 | 25 | 44 | 3,010⁻⁶ |
| POEDS600 | -41 | 25 | 21 | 8,0.10⁻⁶ |
| POEDS1000 | -58 | 42 | 85 | 1.10⁻⁴ |
| POEDS2000 | -53 | 50 | 12.0 | 5,0.10⁻⁵ |

### Exemple 3

### Préparation des films contenant un POEMS

On a préparé plusieurs échantillons de films à partir de POE3, de LiTFSI et de divers POEMS préparés dans l'exemple 1. Le mode opératoire mis en oeuvre est comme suit.

Dans un flacon de 30 mL, on a introduit 0,6 g de POE3, y mg de LiTFSI et z mg de POEMS, puis on a ajouté 8 mL d'acétonitrile. La solution a été mise sous agitation magnétique pendant 4 heures. Elle a ensuite été dégazée, puis coulée dans un anneau en verre collé sur une surface revêtue d'une couche de Téflon®. Le solvant est évaporé en une nuit dans une boîte à gant sous argon équipée d'un piège à froid. Le film a ensuite été séché sous vide dynamique pendant 72 heures avant d'être entreposé en boîte à gant.

On a déterminé le nombre de transport cationique t⁺ pour chaque film.

Les conditions particulières de mise en oeuvre des différents essais sont rassemblées dans le tableau 6 suivant. Oₜ représente le nombre d'atomes d'oxygène solvatant total apporté par POE3 et par l'oligoéther, Li_{TFSI} représente le nombre d'atomes de lithium apportés par LiTFSI, Li_{POEMS} représente le nombre d'atomes de lithium apportés par l'oligoéther, Liₜ représente le nombre total d'atomes de Li, t⁺ représente le nombre de transport cationique.

**Tableau 6**

| Film | LiTFSI y (en mg) | Oligoéther (nature) | Oligoéther z (en mg) | Oₜ/Li_{TFSI} | Oₜ/Li_{POEMS} | Oₜ/Liₜ | t⁺ à 70°C |
|---|---|---|---|---|---|---|---|
| 164a | 130,5 | POEMS164 | 126,4 | 33,3 | 30 | 15,2 | 0,21 |
| 164b | 130,5 | POEMS164 | 92,21 | 32,4 | 40 | 17,9 | 0,27 |
| 164c | 130,5 | POEMS164 | 72,59 | 31,9 | 50 | 19,5 | 0,30 |
| 164d | 130,5 | POEMS164 | 59,86 | 31,6 | 60 | 20,7 | 0,20 |
| 164e | 65,23 | POEMS164 | 126,4 | 66,7 | 30 | 20,7 | 0,21 |
| 164f | 65,23 | POEMS164 | 92,21 | 64,9 | 40 | 24,7 | 0,25 |
| 164g | 65,23 | POEMS164 | 72,59 | 63,8 | 50 | 28 | 0,23 |
| 164h | 65,23 | POEMS164 | 59,86 | 63,2 | 60 | 30,8 | 0,21 |
| 164i | 65,23 | POEMS164 | 126,4 | 100 | 30 | 23,1 | 0,27 |
| 164j | 43,48 | POEMS164 | 92,21 | 97,3 | 40 | 28,3 | 0,30 |
| 164k | 43,48 | POEMS164 | 72,59 | 95,8 | 50 | 32,8 | 0,26 |
| 164l | 43,48 | POEMS164 | 59,86 | 94,7 | 60 | 36,7 | 0,27 |
| 350a | 130,5 | POEMS350 | 261,12 | 39,5 | 30 | 17,1 | 0,24 |
| 350b | 130,5 | POEMS350 | 181,5 | 36,6 | 40 | 19,1 | 0,24 |
| 350c | 65,23 | POEMS350 | 261,12 | 79 | 30 | 21,7 | 0,30 |
| 350d | 65,23 | POEMS350 | 181,5 | 73,2 | 40 | 25,9 | 0,27 |
| 350e | 43,48 | POEMS350 | 261,12 | 118,6 | 30 | 23,9 | 0,30 |
| 350f | 43,48 | POEMS350 | 181,5 | 109,9 | 40 | 29,3 | 0,27 |
| 550a | 130,5 | POEMS550 | 476,0 | 49,4 | 30 | 18,7 | 0,25 |
| 550b | 130,5 | POEMS550 | 307,3 | 42,5 | 40 | 20,6 | 0,28 |
| 550c | 65,23 | POEMS550 | 476,0 | 98,7 | 30 | 23 | 0,26 |
| 550d | 65,23 | POEMS550 | 307,3 | 85 | 40 | 27,2 | 0,29 |
| 550e | 43,48 | POEMS550 | 476,0 | 148,1 | 30 | 24,9 | 0,33 |
| 550f | 43,48 | POEMS550 | 307,3 | 127,6 | 40 | 30,5 | 0,32 |
| 750a | 130,5 | POEMS750 | 833,4 | 65,8 | 30 | 20,6 | 0,27 |
| 750b | 130,5 | POEMS750 | 481,5 | 50,7 | 40 | 22,4 | 0,29 |
| 750c | 65,23 | POEMS750 | 833,4 | 131,6 | 30 | 24,4 | 0,31 |
| 750d | 65,23 | POEMS750 | 481,5 | 101,3 | 40 | 28,7 | 0,31 |
| 20TFS | 197,7 | - | | 20 | | | 0,13 |
| 30TFS | 130,5 | - | | 30 | | | 0,13 |
| 40TFS | 97,84 | - | | 40 | | | 0,14 |

Ces résultats montrent clairement que, pour un rapport global Oₜ/Liₜ inférieur à 40, le nombre de transport est nettement plus élevé lorsque le matériau contient un mélange de sels, au lieu du seul sel LiTFSI.

### Exemple 4

### Préparation des films contenant un POEDS

On a préparé plusieurs échantillons de films à partir de POE3, de LiTFSI et de divers POEDS préparés dans l'exemple 2. Le mode opératoire mis en oeuvre est comme suit.

Dans un flacon de 30 mL, on a introduit 0,6 g de POE3, y mg de LiTFSI et z mg de POEDS, puis on a ajouté 8 mL d'acétonitrile. La solution a été mise sous agitation magnétique pendant 4 heures. Elle a ensuite été dégazée, puis coulée dans un anneau en verre collé sur une surface revêtue d'une couche de Téflon®. Le solvant est évaporé en une nuit dans une boîte à gant sous argon équipée d'un piège à froid. Le film a ensuite été séché sous vide dynamique pendant 72 heures avant d'être entreposé en boîte à gant.

On a déterminé le nombre de transport cationique t⁺ pour chaque film.

Les conditions particulières de mise en oeuvre des différents essais sont rassemblées dans le tableau 7 suivant. Oₜ représente le nombre d'atomes d'oxygène solvatant total apporté par POE3 et par l'oligoéther, Li_{TFSI} représente le nombre d'atomes de lithium apportés par LiTFSI, Li_{POEDS} représente le nombre d'atomes de lithium apportés par l'oligoéther, Liₜ représente le nombre total d'atomes de Li, t⁺ représente le nombre de transport cationique.

**Tableau 7**

| Film | LiTFSI y (en mg) | Oligoéther (nature) | Oligoéther z (en mg) | Oₜ/Li_{TFSI} | Oₜ/Li_{POEMS} | Oₜ/Liₜ | t⁺ à 70°C |
|---|---|---|---|---|---|---|---|
| 200a | 130,5 | POEDS200 | 89,30 | 31,7 | 30 | 15,4 | 0,21 |
| 200b | 130,5 | POEDS200 | 66,07 | 31,2 | 40 | 17,5 | 0,26 |
| 200d | 65,23 | POEDS200 | 66,07 | 62,4 | 40 | 24,4 | 0,22 |
| 400b | 130,5 | POEDS400 | 107,9 | 33,2 | 40 | 18,1 | 0,21 |
| 400c | 65,23 | POEDS400 | 149,2 | 68,8 | 30 | 20,9 | 0,24 |
| 400d | 65,23 | POEDS400 | 107,9 | 66,4 | 40 | 25 | 0,28 |
| 600a | 130,5 | POEDS600 | 220,5 | 37,7 | 30 | 16,7 | 0,20 |
| 600b | 130,5 | POEDS600 | 155,4 | 35,4 | 40 | 18,8 | 0,22 |
| 600d | 65,23 | POEDS600 | 155,4 | 70,8 | 40 | 25,6 | 0,24 |
| 1000e | 43,48 | POEDS1000 | 413,3 | 139,6 | 30 | 24,7 | 0,28 |
| 1000f | 43,48 | POEDS1000 | 155,4 | 122,7 | 40 | 30,2 | 0,31 |
| 2000b | 130,5 | POEDS2000 | 823,9 | 66,8 | 40 | 25 | 0,25 |
| 2000d | 65,23 | POEDS2000 | 823,9 | 133,5 | 40 | 30,8 | 0,26 |
| 20TFS | 195,7 | | | 20 | | | 0,13 |
| 30TFS | 130,5 | - | | 30 | | | 0,13 |
| 40TFS | 97,84 | - | | 40 | | | 0,14 |

## Revendications

1. Matériau à conduction ionique comprenant au moins un composé ionique en solution dans un polymère solvatant,
**caractérisé en ce que** :
- le composé ionique est un mélange d'un bis(trifluorométhanesulfonyl)imidure de lithium (LiTFSI) et d'au moins un oligoéther sulfate de lithium choisi parmi les oligoéthermonosulfate de lithium répondant à la formule R-[O-CH₂-CH₂)]ₙ-O-SO₃⁻Li ⁺ (I) dans laquelle R est un groupe CₘH₂ₘ₊₁ avec 1≤m≤4 et 2≤n≤17, et les oligoétherdisulfate de lithium répondant à la formule Li⁺ O⁻SO₂-O-CH₂-[CH₂-O-CH₂]ₚ-CH₂-O-SO₂-O⁻ Li⁺ (II) dans laquelle 3≤p≤45,
- le rapport global Oₜ/Liₜ est inférieur ou égal à 40, Oₜ représentant le nombre total d'atomes O fournis par le polymère solvatant et par l'oligoéther ;
- la teneur en LiTFSI est telle que le rapport Oₜ/LiTFSI est supérieur ou égal à 20.

2. Matériau à conduction ionique selon la revendication 1, **caractérisé en ce que** le polymère solvatant est choisi parmi les homopolymères et les copolymères d'oxyde d'éthylène, les homopolymères et les copolymères d'oxyde de propylène, les homopolymères et les copolymères de dioxolane.

3. Matériau à conduction ionique selon la revendication 1, **caractérisé en ce que** le polymère solvatant est choisi parmi les copolymères d'oxyde d'éthylène et d'un comonomère réticulable.

4. Matériau à conduction ionique selon la revendication 1, **caractérisé en ce que** le polymère solvatant est choisi parmi les poly(oxyéthylène) ayant une masse molaire de 100 000 g/mol à 5.10⁶ g/mol.

5. Matériau à conduction ionique selon la revendication 1, **caractérisé en ce qu'**il contient en outré un agent plastifiant choisi parmi les solvants liquides polaires aprotiques, la quantité de solvant liquide étant inférieure à 30% en poids.

6. Matériau à conduction ionique selon la revendication 1, **caractérisé en ce que** le composé ionique est un mélange de LiTFSI et d'un oligoéthermonosulfate de formule (I) dans laquelle R est un groupe méthyle et n ≤12.

7. Matériau à conduction ionique selon la revendication 1, **caractérisé en ce que** le composé ionique est un mélange de LiTFSI et d'un oligoétherdisulfate de formule (II) dans laquelle p≤ 12.

8. Matériau à conduction ionique selon la revendication 1, **caractérisé en ce qu'**il contient au moins un additif choisi parmi les charges minérales, les sels de lithium, les charges organiques de type cellulosique, et les agents ignifugeants.

9. Electrolyte solide polymère, **caractérisé en ce qu'**il est constitué par une membrane de matériau à conduction ionique selon la revendication 1.

10. Electrode composite **caractérisée en ce qu'**elle comprend un matériau à conduction ionique selon la revendication 1.

11. Cellule électrochimique comprenant deux électrodes séparés par un électrolyte, **caractérisée en ce que** l'électrolyte comprend un matériau à conduction ionique selon la revendication 1

12. Cellule électrochimique comprenant deux électrodes séparées par un électrolyte, **caractérisée en ce que** l'une au moins des électrodes est une électrode composite comprenant un matériau selon la revendication 1.

13. Générateur électrochimique au lithium, comprenant une électrode négative et une électrode positive séparées par un électrolyte solide polymère, **caractérisé en ce que** l'électrolyte comprend un matériau à conduction ionique selon la revendication 1.

14. Générateur électrochimique selon la revendication 13, **caractérisé en ce que** l'une au moins des électrodes est une électrode composite comprenant un matériau selon la revendication 1 comme liant.

15. Système électrochrome, dans lequel l'électrolyte et/ou le liant d'une électrode composite comprend un matériau à conduction ionique selon la revendication 1.

16. Système de modulation de lumière, dans lequel l'électrolyte et/ou le liant d'une électrode composite comprend un matériau à conduction ionique selon la revendication 1.

17. Membrane sélective **caractérisée en ce qu'**elle est constituée par un matériau à conduction ionique selon la revendication 1.

18. Membrane de référence pour un capteur à membrane, **caractérisée en ce qu'**elle est constituée par un matériau à conduction ionique selon la revendication 1.

## Claims

1. An ion-conducting material comprising at least one ionic compound dissolved in a solvating polymer, **characterized in that**:
- the ionic compound is a mixture of a lithium bis(trifluoromethanesulfonyl)-imide (LiTFSI) and of at least one lithium oligoether sulfate chosen from the lithium oligoether monosulfates corresponding to the formula R-[O-CH₂-CH₂)]ₙ-O-SO₃⁻Li⁺ (I) in which R is a group CₘH₂ₘ₊₁ with 1 ≤ m≤ 4 and 2 ≤ n ≤ 17, and the lithium oligoether disulfates corresponding to the formula Li⁺ O⁻SO₂-O-CH₂-[CH₂-O-CH₂]ₚ-CH₂-O-SO₂-O⁻Li⁺ (II) in which 3 ≤ p ≤ 45,
- the overall ratio Oₜ/Liₜ is less than or equal to 40, Oₜ representing the total number of O atoms provided by the solvating polymer and by the oligoether,
- the LiTFSI content is such that the ratio Oₜ/LiTFSI is greater than or equal to 20.

2. The ion-conducting material as claimed in claim 1, **characterized in that** the solvating polymer is chosen from ethylene oxide homopolymers and copolymers, propylene oxide homopolymers and copolymers, and dioxolane homopolymers and copolymers.

3. The ion-conducting material as claimed in claim 1, **characterized in that** the solvating polymer is chosen from copolymers of ethylene oxide and of a crosslinkable comonomer.

4. The ion-conducting material as claimed in claim 1, **characterized in that** the solvating polymer is chosen from poly(oxyethylenes) with a molar mass of from 100 000 g/mol to 5 × 10⁶ g/mol.

5. The ion-conducting material as claimed in claim 1, **characterized in that** it also contains a plasticizer chosen from polar aprotic liquid solvents, the amount of liquid solvent being less than 30% by weight.

6. The ion-conducting material as claimed in claim 1, **characterized in that** the ionic compound is a mixture of LiTFSI and of an oligoether monosulfate of formula (I) in which R is a methyl group and n ≤ 12.

7. The ion-conducting material as claimed in claim 1, **characterized in that** the ionic compound is a mixture of LiTFSI and of an oligoether disulfate of formula (II) in which p ≤ 12.

8. The ion-conducting material as claimed in claim 1, **characterized in that** it contains at least one additive chosen from mineral fillers, lithium salts, organic fillers of cellulose type and flame retardants.

9. A solid polymeric electrolyte, **characterized in that** it consists of a membrane of ion-conducting material as claimed in claim 1.

10. A composite electrode, **characterized in that** it comprises an ion-conducting material as claimed in claim 1.

11. An electrochemical cell comprising two electrodes separated by an electrolyte, **characterized in that** the electrolyte comprises an ion-conducting material as claimed in claim 1.

12. An electrochemical cell comprising two electrodes separated by an electrolyte, **characterized in that** at least one of the electrodes is a composite electrode comprising a material as claimed in claim 1.

13. A lithium electrochemical generator, comprising a negative electrode and a positive electrode separated by a solid polymeric electrolyte, **characterized in that** the electrolyte comprises an ion-conducting material as claimed in claim 1.

14. The electrochemical generator as claimed in claim 13, **characterized in that** at least one of the electrodes is a composite electrode comprising a material as claimed in claim 1, as binder.

15. An electrochromic system, in which the electrolyte and/or the binder for a composite electrode comprises an ion-conducting material as claimed in claim 1.

16. A light-modulating system, in which the electrolyte and/or the binder for a composite electrode comprises an ion-conducting material as claimed in claim 1.

17. A selective membrane, **characterized in that** it consists of an ion-conducting material as claimed in claim 1.

18. A reference membrane for a membrane sensor, **characterized in that** it consists of an ion-conducting material as claimed in claim 1.

## Patentansprüche

1. Ionenleitfähiges Material, umfassend zumindest eine in einem solvatisierenden Polymer gelöste ionische Verbindung, **dadurch gekennzeichnet dass**:
- die ionische Verbindung ein Gemisch aus Lithium-bis(trifluormethansulfonyl)-imid (LiTFSI) und zumindest einem Lithiumoligoethersulfat ist, das aus folgenden ausgewählt ist: Lithiumoligoethermonosulfaten der Formel R-[O-CH₂-CH₂)]ₙ-O-SO₃⁻Li⁺ (I), worin R eine CₘH₂ₘ₊₁-Gruppe ist, für die gilt: 1 ≤ m ≤ 4 und 2 ≤ n ≤ 17, und Lithiumoligoetherdisulfaten der Formel Li⁺O⁻SO₂-O-CH₂-[CH₂-O-CH₂]ₚ-CH₂-O-SO₂-O⁻Li⁺ (II), für die gilt: 3 ≤ p ≤ 45;
- das Gesamtverhältnis Oₜ/Liₜ ≤ 40 ist, wobei Oₜ für die Gesamtanzahl der vom solvatisierenden Polymer und vom Oligoether bereitgestellten O-Atome steht;
- der LiTFSI-Gehalt so ausgewählt ist, dass das Verhältnis Oₜ/LiTFSI ≥ 20 ist.

2. Ionenleitfähiges Material nach Anspruch 1, **dadurch gekennzeichnet, dass** das solvatisierende Polymer aus Ethylenoxidhomopolymeren und -copolymeren, Propylenoxidhomopolymeren und -copolymeren sowie Dioxolanhomopolymeren und -copolymeren ausgewählt ist.

3. Ionenleitfähiges Material nach Anspruch 1, **dadurch gekennzeichnet, dass** das solvatisierende Polymer aus Copolymeren von Ethylenoxid mit einem vernetzbaren Comonomer ausgewählt ist.

4. Ionenleitfähiges Material nach Anspruch 1, **dadurch gekennzeichnet, dass** das solvatisierende Polymer aus Poly(oxyethylen) mit einem Molekulargewicht von 100.000 g/mol bis 5 x 10⁶ g/mol ausgewählt ist.

5. Ionenleitfähiges Material nach Anspruch 1, **dadurch gekennzeichnet, dass** es weiters einen Weichmacher enthält, der aus aprotischen, polaren flüssigen Lösungsmitteln ausgewählt ist, wobei die Menge des flüssigen Lösungsmittels weniger als 30 Gew.-% beträgt.

6. Ionenleitfähiges Material nach Anspruch 1, **dadurch gekennzeichnet, dass** die ionische Verbindung ein Gemisch aus LiTFSI und einem Oligoethermonosulfat der Formel (I) ist, worin R eine Methylgruppe ist und n ≤ 12 ist.

7. Ionenleitfähiges Material nach Anspruch 1, **dadurch gekennzeichnet, dass** die ionische Verbindung ein Gemisch aus LiTFSI und einem Oligoetherdisulfat der Formel (II) ist, worin p ≤ 12 ist.

8. Ionenleitfähiges Material nach Anspruch 1, **dadurch gekennzeichnet, dass** es zumindest ein Additiv enthält, das aus mineralischen Füllstoffen, Lithiumsalzen, organischen Füllstoffen vom Cellulosetyp und flammfesten Mitteln ausgewählt ist.

9. Polymerer Festelektrolyt, **dadurch gekennzeichnet, dass** er aus einer Membran aus ionenleitfähigem Material nach Anspruch 1 besteht.

10. Verbundelektrode, **dadurch gekennzeichnet, dass** sie ein ionenleitfähiges Material nach Anspruch 1 umfasst.

11. Elektrochemisches Element, das zwei durch einen Elektrolyt getrennte Elektroden umfasst, **dadurch gekennzeichnet, dass** der Elektrolyt ein ionenleitfähiges Material nach Anspruch 1 umfasst.

12. Elektrochemisches Element, das zwei durch einen Elektrolyt getrennte Elektroden umfasst, **dadurch gekennzeichnet, dass** zumindest eine der Elektroden eine Verbundelektrode ist, die ein Material nach Anspruch 1 umfasst.

13. Elektrochemischer Lithiumgenerator, der eine positive Elektrode und eine negative Elektrode umfasst, die durch einen polymeren Festelektrolyten getrennt sind, **dadurch gekennzeichnet, dass** der Elektrolyt ein ionenleitfähiges Material nach Anspruch 1 umfasst.

14. Elektrochemischer Generator nach Anspruch 13, **dadurch gekennzeichnet, dass** zumindest eine der Elektroden eine Verbundelektrode ist, die ein Material nach Anspruch 1 als Bindemittel umfasst.

15. Elektrochromes System, worin der Elektrolyt und/oder das Bindemittel einer Verbundelektrode ein ionenleitfähiges Material nach Anspruch 1 umfassen/umfasst.

16. Lichtmodulationssystem, worin der Elektrolyt und/oder das Bindemittel einer Verbundelektrode ein ionenleitfähiges Material nach Anspruch 1 umfassen/umfasst.

17. Selektive Membran, **dadurch gekennzeichnet, dass** sie aus einem ionenleitfähigen Material nach Anspruch 1 besteht.

18. Referenzmembran für einen Membransensor, **dadurch gekennzeichnet, dass** sie aus einem ionenleitfähigen Material nach Anspruch 1 besteht.
